Europäisches Patentamt

European Patent Office

Office européen des brevets

(11) Publication number: **0 277 390 B1**

## EUROPEAN PATENT SPECIFICATION

(45) Date of publication of patent specification: **29.07.92** (51) Int. Cl.⁵: **G02B 6/30**

(21) Application number: **87202637.2**

(22) Date of filing: **29.12.87**

(54) **Assembly comprising a planar optical circuit and an optical fibre coupled thereto.**

(30) Priority: **15.01.87 NL 8700080**

(43) Date of publication of application:
**10.08.88 Bulletin 88/32**

(45) Publication of the grant of the patent:
**29.07.92 Bulletin 92/31**

(84) Designated Contracting States:
**DE FR GB IT SE**

(56) References cited:
**US-A-44 784 85**

**IBM TECHNICAL DISCLOSURE BULLETIN, vol. 18, no. 2, July 1975, pages 485-486, New York, US; E.C. UBERBACHER: "Optical connection for LSI electrical circuits"**

**JOURNAL OF LIGHTWAVE TECHNOLOGY, vol. LT-3, no. 4, August 1985, pages 795-798, IEEE, New York, US; E.J. MURPHY et al.: "Permanent attachment of single-mode fiber arrays to waveguides"**

**FUNKSCHAU, vol. 57, no. 23, November 1985, pages 63-64, Munich, DE; R. SCHIFFEL: "Grundschaltungen der Elektronik"**

(73) Proprietor: **N.V. Philips' Gloeilampenfabrieken
Groenewoudseweg 1
NL-5621 BA Eindhoven(NL)**

(72) Inventor: **Khoe, Giok Djan
c/o INT. OCTROOIBUREAU B.V. Prof. Holstlaan 6
NL-5656 AA Eindhoven(NL)**

(74) Representative: **Weening, Cornelis et al
INTERNATIONAAL OCTROOIBUREAU B.V.
Prof. Holstlaan 6
NL-5656 AA Eindhoven(NL)**

# Description

The invention relates to an asembly comprising a planar optical circuit with a substrate in which there is provided at least one optical waveguide, an end portion of which extends perpendicularly with respect to an end face of the substrate and terminates at this end face, and an optical fibre which is optically coupled to the waveguide so that the optical axis of the optical fibre is collinear with the optical axis of said end portion of the waveguide.

An assembly of this kind is known, for example from WO-A-86/00717. This known assembly is formed by accurately positioning the optical fibre and the weaveguide with respect to one another by means of a micromanipulator and by subsequently securing these parts in the correct position by means of an adhesive. This method is time-consuming and requires a comparatively large amount of expertise. Moreover, the assembly thus formed can in principle not be disassembled.

US 4,478,485 discloses an optical fibre coupling connector for coupling at least one optical fibre to an optical element such as a light source, a light detector or another optical fibre. The optical element and the end of the first optical fibre are each secured in a corresponding cylindrical member.

It is the object of the invention to provide an assembly of the kind set forth which is composed of prepared parts which can be assembled with the desired accuracy without substantial expertise being required, it also being possible to disassemble the assembly, if desired.

To achieve this, the assembly in accordance with the invention is characterized in that

a) the substrate is secured within a substrate envelope having a first cylindrical reference surface whose cylindrical axis coincides with the optical axis of said end portion of the waveguide,

b) an end portion of the optical fibre is secured within a fibre envelope having a second cylindrical reference surface whose cylindrical axis coincides with the optical axis of the optical fibre,

c) there is provided an alignment member which cooperates with the first and the second reference surfaces so that their cylindrical axes are maintained collinear,

d) on the substrate adjacent a further end face opposite to said end face there are provided, at least two separate mutually parallel optical waveguide end portions which terminate at said further end face,

e) a further fibre envelope, positioned opposite said further end face, contains a number of end portions of optical fibres, which number corresponds to the number of waveguide end portions, the spacing of the optical axes of said end portions being the same as that of the optical axes of the waveguide end portions and

f) a further alignment member cooperates with the substrate envelope and the further fibre envelope to maintain said optical fibre end portions and said mutually parallel end portions respectively aligned.

The reference surfaces can be provided immediately after the mounting of the substrate and the fibre in their respective envelopes, for example by means of the method disclosed in US-A-4,289,397. At a later stage these parts can be easily combined with the required accuracy by means of the alignment member. If a non-detachable connection is desired, the parts can be glued into the alignment member. However, this is not necessary so that a detachable connection is also possible, if desired.

For the invention application the substrate should comprise, near at least one of its end faces, at least two mutually parallel end portions of optical waveguides which terminate in said end face, for example when the substrate comprises a planar optical multiplexer as described in DE-A-32,30,657. In accordance with the invention in the fibre envelope positioned opposite said end face there are secured a number of end portions of optical fibres, which number corresponds to the number of waveguide end portions, the spacing of the optical axes of said end portions being the same as that of the optical axes of the waveguide end portions and when the number of waveguides or fibres is odd, the axis of the reference surface preferably coincides exactly with the axis of the central waveguide or fibre. When this is not the case, this axis preferably coincides with the axis of the waveguide or fibre which is situated nearest to the centre of the row of waveguides or fibres.

The invention will be described in detail hereinafter with reference to the drawing. Therein:

Figure 1 is a longitudinal sectional view of an embodiment of an assembly in accordance with the invention,

Figure 2 is a perspective view of a substrate envelope,

Figure 3 is a perspective view of a fibre envelope, and

Figure 4 is a side elevation of the assembly shown in Figure 1.

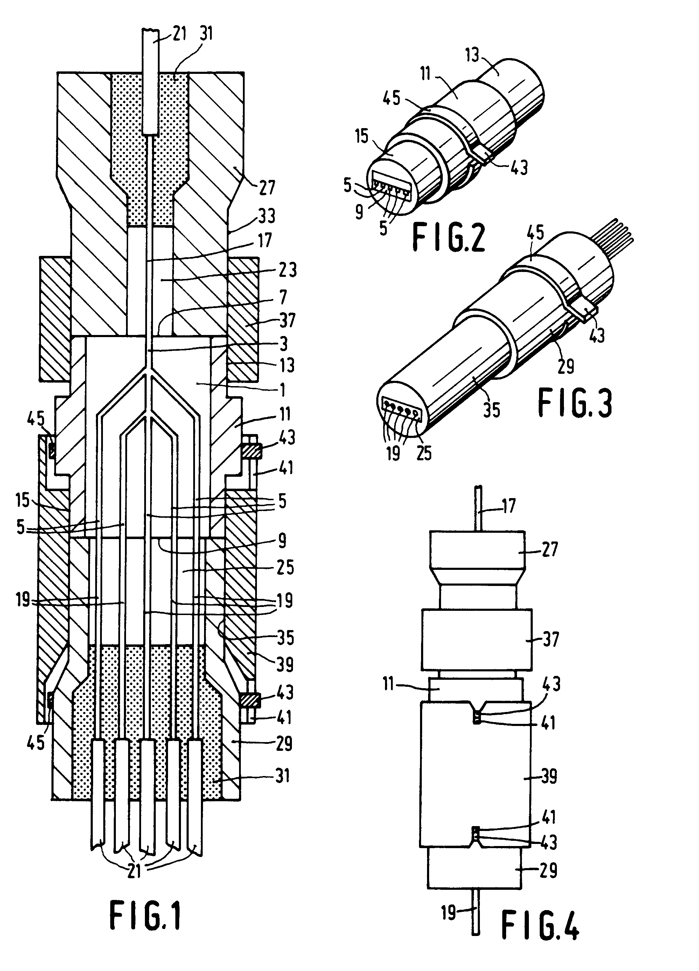

The assembly shown in Figure 1 comprises a planar optical circuit in the form of a planar multiplexer as described in DE-A-32 30 657. This circuit consists of a flat substrate 1, an optical waveguide 3 being formed near a principal surface thereof (the plane of drawing in Figure 1), said waveguide being split into five mutually parallel, equidistant waveguides 5. The substrate 1 is made of, for example glass having a comparatively low refractive index in which there are provided tracks which have a higher refractive index and which form the waveguides 3, 5. The single waveguide 3 extends perpendicularly to a first end face 7 of the substrate and terminates in this end face. The five parallel waveguides 5 extend perpendicularly to a second end face 9 of the substrate, situated opposite the first end face 7, and terminate in the second end face. The substrate 1 is secured in a substrate envelope 11 which consists of a metal housing having two first reference surfaces 13 and 15. The first reference surfaces 13 and 15 have the shape of a cylindrical surface, the cylinder axis of which coincides with the optical axis of the single waveguide 3 and the central one of the five parallel waveguides 5, respectively. The first reference surfaces 13, 15 are formed, for example by means of the method disclosed in US-A-4,289,374.

The assembly furthermore comprises a number of optical fibres 17, 19 which are coupled to the waveguides 3, 5, respectively, each optical fibre consisting of an envelope of glass having a comparatively low refractive index and a core of glass having a comparatively high refractive index, enclosed by a protective plastics layer 21. The plastics layer 21 has been removed from the end portions of the fibres 17, 19 which are arranged in a first fibre holder 23 and a second fibre holder 25, respectively, which are secured in a first fibre envelope 27 and a second fibre envelope 29, respectively. The rear portion of the fibre envelopes 27, 29 is filled with a suitable plastics compound 31. The fibre holders 23, 25 are known per se. The single first fibre holder 23 may consist of, for example a capillary and the multiple second fibre holder 25 may consist of a plate comprising parallel grooves in which the end portions of the fibres 9 are arranged, after which the plate is covered with a second plate (not shown). Examples of such plate-shaped fibre holders are described in EP-A-0,109,648 and the previous Netherlands Application 85 03 409. The spacing of the optical axes of the five fibre end portions 19 in the second fibre holder 25 is the same as that of the optical axes of the five waveguides 5. The fibre envelopes 27 and 29 comprise cylindrical second reference surfaces 33 and 35, respectively, the cylinder axis of which coincides with the optical axis of the fibre 17 and the central one of the five fibres, respectively. A fibre envelope which resembles the second fibre envelope 29 is described in the previous Netherlands Patent Application 86 01 855.

The assembly also comprises a first alignment member 37 and a second alignment member 39 which in the present embodiment are shaped as hollow, cylindrical loops in which the described reference surfaces 13, 15, 33, 35 fit accurately so that they are arranged with their cylinder axes extending one in the prolongation of the other in a two-by-two fashion. Evidently, other alignment members can also be used, for example V-shaped grooves with pressure means as described in US-A-4,478,485 or DE-A-3,208,797 a conical clamping bush as described in US-A-3,982,815 or a bush comprising three leaf-springs as described in EP-A-0,185,413.

The cylinder axes of the first reference surface 13 and the second reference surface 33 coincide with the optical axis of the single waveguide 3 and the single optical fibre 17, respectively. A rotation of the first fibre envelope 27 or the substrate envelope 11 about these axes, therefore, has no effect on the quality of the optical coupling between the waveguide 3 and the fibre 17. Therefore, the first alignment member 37 need not comprise means for preventing such a rotation. In the present embodiment it is formed by a simple cylindrical bush.

For the optical coupling between the five waveguides 5 and the five optical fibres 19 it is important that the planes in which the optical axes of the waveguides and the fibres are situated coincide. Therefore, rotation of the substrate envelopee 11 or the second fibre envelope 29 about the cylinder axis of the first reference surface 15 or the second reference surface 35, respectively, is not permissible in this case. To this end, the second alignment member 39 comprises guide means in the form of axial slots 41 in the wall (see also Figure 4) which cooperate with radial projections 43 on the substrate envelope 11 and the second fibre envelope 39 (see also Figures 2 and 3). The radial projections 43 are formed by lugs on rings 45 secured around the substrate envelope 11 and the second fibre envelope 39. These rings are rotated so that the projections 43 are situated in the same plane as the optical axes of the waveguides 5 and the fibres 19, respectively. Subsequently, the rings are secured, for example by means of a welded joint. When the second fibre envelope 39 and the substrate envelope 11 have been interconnected by means of the second alignment member 39, the first and second reference surfaces 15 and 35 fit accurately in the internal cavity of the alignment member, so that their cylinder axes and hence also the optical axes of the central waveguide 5 and the central optical fibre 19 are situated exactly one in the prolongation of the other. As result of the cooperation between the projections 43 and the slots 41, the axes of the other waveguides 5 and fibres 19 will also be situated one in the prolongation of the other in a two-by-two fashion, so that each waveguide is optically coupled to a fibre.

If desired, the substrate envelope 11 and the fibre envelopes 27, 29 can be permanently secured in the alignment members 37, 39, for example by means of an adhesive. However, the alignment members 37, 39 may alternatively form part of detachable connectors, so that the assembly formed can be disassembled again at all times.

In the described embodiment the substrate 1 is secured in a single substrate envelope 11 having two first reference surfaces 13, 15, one of which (13) encloses the part of the substrate adjoining the first end face 7, the other surface (15) enclosing the part adjoining the second end face 9. Use can alternatively be made of two substrate envelopes, each of which encloses one of said parts of the substrate 1. The intermediate part of the substrate 1 may then remain uncovered, if desired. When the substrate 1 comprises an electro-optical planar circuit, electrical connections can then be fed out via the opening between the two substrate envelopes.

The planar optical circuit of the described embodiment is formed by a multiplexer. It will be apparent that any planar optical circuit can be used in an assembly in accordance with the invention. A circuit of this kind may also comprise a number of end faces other than two and waveguides which terminate therein and which are coupled to optical fibres in the same way as described above.

## Claims

1. An assembly comprising a planar optical circuit with a substrate (1) in which there is provided at least one optical waveguide (3), an end portion of which extends perpendicularly with respect to an end face (7) of the substrate and terminates at this end face, and an optical fibre (17) which is optically coupled to the waveguide so that the optical axis of the optical fibre is collinear with the optical axis of said end portion of the waveguide, characterized in that

   a) the substrate (1) is secured within a substrate envelope (11) having a first cylindrical reference surface (13) whose cylindrical axis coincides with the optical axis of said end portion of the waveguide (3),

   b) an end portion of the optical fibre (17) is secured within a fibre envelope (27) having a second cylindrical reference surface (33) whose cylindrical axis coincides with the optical axis of the optical fibre,

   c) there is provided an alignment member (37) which cooperates with the first and the second reference surfaces (13, 33) so that their cylindrical axes are maintained collinear,

   d) on the substrate (1) adjacent a further end face opposite to said end face there are provided at least two separate mutually parallel optical waveguide end portions (5) which terminate at said further end face,

   e) a further fibre envelope (39), positioned opposite said further end face (9), contains a number of end portions of optical fibres (19), which number corresponds to the number of waveguide end portions (5), the spacing of the optical axes of said end portions being the same as that of the optical axes of the waveguide end portions, and

   f) a further alignment member cooperates with the substrate envelope and the further fibre envelope to maintain said optical fibre end portions and said mutually parallel end portions respectively aligned.

2. An assembly as claimed in Claim 1, wherein the cylinder axes of the the first and the second reference surfaces (15, 35) coincide with the optical axis of the waveguide (5) or the fibre (19) situated nearest to the centre.

## Revendications

1. Dispositif comportant un circuit optique plan pourvu d'un substrat (1), sur lequel est prévu au moins un guide d'ondes optiques (3) dont une partie finale s'étend perpendiculairement à une face finale (7) du substrat pour terminer dans cette face finale, et d'une fibre optique (17) couplée optiquement au guide d'ondes de façon que l'axe optique de la fibre optique est colinéaire avec celui de ladite partie finale du guide d'ondes, caractérisé en ce que

   a) le substrat (1) est fixé dans une enveloppe de substrat (11) présentant une première surface de référence cylindrique (13) dont l'axe cylindrique coïncide avec l'axe optique de ladite partie finale du guide d'ondes (3),

   b) une partie finale de la fibre optique (17) est fixée dans une enveloppe de fibre (27) présentant une seconde surface de référence cylindrique (33) dont l'axe cylindrique coïncide avec l'axe optique de la fibre optique,

   c) il est prévu un organe d'alignement (37) coopérant avec les première et seconde surfaces de référence (13, 33) de sorte que leurs axes cylindriques sont maintenus colinéaires,

   d) sur le substrat (1), à côté d'une autre face finale opposée à ladite face finale, il est prévu au moins deux parties finales de guide d'ondes optiques indépendantes mutuellement parallèles (5) qui se terminent dans ladite autre face terminale,

   e) une autre enveloppe de fibres (29) disposée à l'opposé de ladite autre face finale (9), contient un certain nombre de parties finales de fibres optiques (19) correspondant au nombre de parties finales de guide d'ondes (5), l'écartement des axes optiques desdites parties finales étant égal à celui des axes optiques des parties finales de guide d'ondes et

f) un autre organe d'alignement coopère avec l'enveloppe de substrat et avec l'autre enveloppe de fibres pour maintenir l'alignement desdites parties finales de fibre optique ou lesdites parties finales mutuellement parallèles.

2. Dispositif selon la revendication 1, dans lequel les axes cylindriques des première et seconde surfaces de référence (15, 35) coïncident avec l'axe optique du guide d'ondes (5) ou de la fibre (19) situé le plus proche du centre.

**Patentansprüche**

1. Einrichtung mit einem planaren optischen Kreis mit einem Substrat (1), in dem mindestens ein optischer Wellenleiter (3) vorgesehen ist, von dem ein Endteil sich senkrecht zu einer Endfläche (7) des Substrats erstreckt und bei dieser Endfläche endet, sowie mit einer optischen Faser (17), die derart mit dem Wellenleiter optisch gekoppelt ist, daß die optische Achse der optischen Faser mit der optischen Achse des genannten Endteils des Wellenleiters fluchtet, <u>dadurch gekennzeichnet,</u> daß

a) das Substrat (1) in einer Substrathülle (11) mit einer ersten zylinderförmigen Bezugsfläche (13) befestigt ist, deren Zylinderachse mit der optischen Achse des genannten Endteils des Wellenleiters (3) zusammenfällt,

b) ein Endteil der optischen Faser (17) innerhalb der Faserhülle (27) mit einer zweiten zylinderförmigen Bezugsfläche (33) befestigt ist, deren Zylinderachse mit der optischen Achse der optischen Faser zusammenfällt,

c) ein Zentrierelement (37) vorgesehen ist, das mit der ersten und zweiten Bezugsfläche (13, 33) derart zusammenarbeitet, daß die Zylinderachsen nach wie vor zueinander fluchten,

d) auf dem Substrat (1) neben einer weiteren Endfläche gegenüber der genannten Endfläche mindestens zwei einzelne zueinander parallele optische Wellenleiterendteile (5) vorgesehen sind, die an der genannten weiteren Endfläche enden,

e) eine weitere gegenüber der genannten weiteren Endfläche (9) vorgesehene Faserhülle (39) eine Anzahl Endteile optischer Fasern (19) enthält, deren Anzahl der Anzahl Wellenleiterendteile (5) entspricht, wobei der gegenseitige Abstand der optischen Achsen der Endteile derselbe ist wie der der optischen Achsen der Wellenleiterendteile, und

f) ein weiteres Zentrierelement mit der Substrathülle und der weiteren Faserhülle zusammenarbeitet, damit die genannten optischen Faserendteile bzw. die genannten sich parallel zueinander erstreckenden Endteile nach wie vor zentriert sind.

2. Einrichtung nach Anspruch 1, wobei die Zylinderachsen der ersten und zweiten Bezugsfläche (15, 35) mit der optischen Achse des Wellenleiters (5) oder der der Mitte am nächsten liegenden Faser (19) zusammenfallen.

FIG.1

FIG.2

FIG.3

FIG.4